# EUROPEAN PATENT APPLICATION

(11) **EP 4 167 563 A1**
(43) Date of publication of application: **19.04.2023**
(21) Application number: 21202148.9
(22) Date of filing: 12.10.2021
(51) Int. Cl.: H04N 5/232, G06N 3/08, G06N 20/00

(54) **METHOD AND DEVICE FOR GENERATING MACHINE LEARNING TRAINING DATA AND METHOD FOR TRAINING A MACHINE LEARNING SYSTEM**

(71) Applicant: Continental Autonomous Mobility Germany GmbH, 85057 Ingolstadt (DE)
(72) Inventor: Reichardt, Jörg, 90411 Nürnberg (DE)
(74) Representative: Continental Corporation

(57) **Abstract**

The invention relates to a method and a device for generating machine learning training data. According to the method, corresponding image pairs are captured, wherein each image pair comprises a first image and a second image. To do so, a common light path (3) is split by a beam splitter (4) into a first light path (5) to a first optical arrangement (7) and a second light path (6) to a second optical arrangement (8), wherein the first optical arrangement (7) and the second optical arrangement (8) differ in at least one distinguishing feature. The first image is provided by a first image sensor (9) of the first optical arrangement (7) and the second image is provided simultaneously to the first image by a second image sensor (11) of the second optical arrangement (8). Finally, the first image and the second image are associated with one another and are saved to a non-volatile memory. The invention further relates to a method for training a machine learning system.

## Description

### TECHNICAL FIELD

The invention relates to a method and a device for generating machine learning training data. The invention further relates to a method for training a machine learning system with the generated machine learning training data.

### BACKGROUND

Machine learning systems learn functions that map input data to target data from examples in an adaptive process called "training". Well specified and trained, i.e., adapted, functions are then able to not only (closely) reproduce correct output for the examples given during training, but also generate correct output for input not presented during training. This ability to generalize from examples sets machine learning systems apart from classical algorithms and is what makes them so widely applicable. The ability to generalize, however, crucially depends on both quality and quantity of the data used for training. Naturally, the better the distribution of training data represents that of data seen during application, the better.

Depending on the function trained, example data can be generated automatically or via manual labor. Yet while the manual generation of example data is always tedious and time consuming, there are functions for which it is basically impossible.

Image to image transformations in which the pixels of an input image are mapped to pixels of a corresponding target image are a prime example of a class of functions that greatly benefit from automatic generation of training examples.

One example of such an image transformation and automated generation of training data is disclosed in arXiv:1805.01934 (Ch. Chen, et al.: "Learning to See in the Dark"). A function is trained to produce correctly exposed images from underexposed images of poorly illuminated scenes. Training examples are corresponding pairs of images - an underexposed input image and a correctly exposed target image. The pairs of training images were obtained by sequentially photographing the same static scene twice with different exposure settings, the input image with incorrectly short and the target image with correct long exposure time. However, for scenes containing moving objects or more generally images taken from a moving sensor, the difference in exposure time will introduce unwanted artefacts such as motion blur in the target image that has no correspondence in the input image taken at a shorter exposure time. Additionally, the sequential acquisition of images may introduce incongruences between training images as objects may have entered or left the scene between takes. Training the machine learning system with such image pairs will result in the unwanted introduction of motion blur and other artefacts in the output. On the other hand, if only static scenes are used for training, there is a limitation to said scenes. The distribution of scenes in the training images would not represent the distribution of scenes that the trained machine learning system is likely to encounter in a real-world application, a phenomenon known as distribution shift. Both these problems are critical when the described method of image enhancement is to be used in early stages of an image processing pipeline of a security critical application such as an autonomous vehicle that contains further functions such as object detection or semantic segmentation.

A second example of image transformations is disclosed in arXiv: 1901.00893 (H. Porav, et al.: "I Can See Clearly Now: Image Restoration via De-Raining"), where corresponding pairs of input images taken through a screen with water droplets and target images without water droplets are created. To capture these images, two cameras are mounted side-by-side and image pairs are taken at the same time with identical exposure settings. However, said side-by-side mounting of cameras has the consequence that pairs of images will also slightly differ in perspective. Hence, by learning to remove the effect of the water droplets, the machine learning system also learns to correct the perspective, i.e., introduces a virtual shift of the camera position. Again, this is highly problematic if such a technique is to be used as part of a stereoscopic vision system that relies on these very differences in perspective between cameras to obtain depth information of the scene.

### SUMMARY

It is therefore an object of the present invention to provide a method and a device for generating machine learning training data and a method for training a machine learning system without the introduction of unwanted artefacts such as motion blur, distribution shift or a change in perspective.

The object of the present invention is solved by the subject-matter of the independent claims, wherein further embodiments are incorporated in the dependent claims.

According to a first aspect of the invention, a method for generating machine learning training data is provided. This method is independent of the actual kind of machine learning system used and may be performed automatically. For example, the machine learning training data generated by the method may be used to train a deep neural network, a convolutional neural network or a Gaussian process. The machine learning system that can be trained with the method takes an image as an input and may perform image processing or object recognition. In particular, machine learning systems that are part of a computer vision system, e.g., in a vehicle, may be trained.

According to the method, corresponding image pairs are captured, wherein each image pair comprises a first image and a second image. To capture said image pairs, a common light path is split by a beam splitter into a first light path and a second light path. Said beam splitter may be, e.g., a beam splitter cube made from two triangular glass prisms or a half-silvered mirror. The first light path is directed towards a first optical arrangement and the second light path is directed towards a second optical arrangement, wherein the first optical arrangement and the second optical arrangement differ in at least one distinguishing feature.

The first image of the image pair is provided by a first image sensor of the first optical arrangement. Likewise, the second image of the image pair is provided by a second image sensor of the second optical arrangement. The first image and the second image are taken simultaneously. In this context, simultaneously is to be understood as at the exactly same time or at times that differ so little that the captured scene does not change significantly, e.g., less than 5 ms, less than 10 ms or less than 40 ms.

Hence, the first image and the second image are taken simultaneously and have, due to the beam splitter setup, the same perspective. Also, this method can be performed for any scene, static or moving, such that there is no distribution shift. Further, the difference in at least one distinguishing feature makes the image pairs suitable as training data for a machine learning system such that only the effects of the distinguishing feature are used for training.

Further, the first image and the second image of each image pair are associated with one another and are saved to a non-volatile memory. This can be performed in a variety of ways. As an example, the association of the first image and the second image may be performed by a time stamp added to the images, such that images with an identical or almost identical time stamp belong to one image pair. In this context, almost identical means with a difference such that the images are considered to have been captured simultaneously, e.g., such that the difference is less than 5 ms, less than 10 ms or less than 40 ms. If an association by time stamp is used, the first images and the second images may even be saved to separate non-volatile memories, e.g., directly by the first image sensor and the second image sensor, respectively. Another way of associating the first image and the second image is to save the first image and the second image of each image pair to a common directory, wherein a separate directory is created for each image pair. Yet another way of associating the first image and the second image is to label them with similar file names.

According to an embodiment, a common objective lens is arranged in the common light path. Hence, only one objective lens may be used to capture both the first image and the second image. The distance from the last element of the objective lens to the focal point has to be long enough to accommodate the beam splitter. Also, since the light path behind the common objective lens is rather narrow, a small beam splitter may be used.

According to an embodiment, the first optical arrangement further comprises a first objective lens and the second optical arrangement further comprises a second objective lens. If there is no common objective lens in the common light path, this setup may require a rather large beam splitter, particularly if the first and second objective lenses have a wide field of view. On the other hand, the distance between the last element of the first and second objective lens and the focal point of said objective lenses may be small. The first and second objective lenses may also be used in combination with the common objective lens to provide a more complex lens design. In particular, the first objective lens is identical to the second objective lens. That way, no differences between the first image and the second image are introduced from the first and second objective lenses.

According to an embodiment, the common objective lens or the first and second objective lenses are similar or identical to those objective lenses that are supposed to be used in an application and that provide the images that are subsequently processed by a machine learning system trained with the machine learning training data generated by the method, e.g., objective lenses of a computer vision system, for example of a vehicle.

According to an embodiment, the first image sensor is identical to the second image sensor. Hence, the image sensors do not introduce any difference between the first image and the second image. In particular, the first image sensor and the second image sensor may be similar or identical to those image sensors that are supposed to be used in an application and that provide the images that are subsequently processed by a machine learning system trained with the machine learning training data generated by the method, e.g., image sensors of a computer vision system, for example of a vehicle.

According to an embodiment, the at least one distinguishing feature comprises a modification filter in the second optical arrangement. The modification filter may be arranged in front of the second objective lens, i.e., between the beam splitter and the second objective lens, or behind the second objective lens, i.e., between the second objective lens and the second image sensor. If no second objective lens is present, the modification filter is arranged between the beam splitter and the second image sensor. The modification filter may be a polarizing filter. Since a polarizing filter alters, i.e., enhances or suppresses, depending on the orientation of the polarizing filter, reflections off of surfaces, machine learning training data obtained with a polarizing filter as the distinguishing feature may be used to train a machine learning system to reduce, enhance, or detect reflections. Alternatively or additionally, the modification filter may be a gray filter. Hence, provided that the first and second image sensors are identical and that exposure times chosen for the frist and the second image sensor are identical, the second image is darker than the first image. Consequently, machine learning training data obtained with a gray filter as the distinguishing feature may be used to train a machine learning system to obtain a correctly exposed image from an underexposed one or to obtain a correctly exposed image from an overexposed one. Alternatively or additionally, the modification filter may be a screen with raindrops. Said raindrops may be sprayed onto the screen and wind may be used to move and shape the raindrops. Machine learning training data obtained with a screen with raindrops as the distinguishing feature may be used to train a machine learning system to remove the effect of raindrops on the screen, e.g., on a windshield of a vehicle. Alternatively or additionally, the modification filter may be a screen with dirt. Machine learning training data obtained with a screen with dirt as the distinguishing feature may be used to train a machine learning system to remove the effect of dirt on the screen, e.g., on a windshield of a vehicle.

According to an embodiment, the at least one distinguishing feature comprises that the first image sensor is a visible light image sensor and the second image sensor is an infrared image sensor. Here, visible light refers to light with wavelengths of approximately 380 nm to 700 nm and a visible light image sensor may be, as an example, an rgb sensor. Also, infrared refers to infrared radiation with wavelengths of approximately 700 nm to 1000 µm, in particular between 3.5 µm and 15 µm. Hence, the second image sensor is a thermal imaging sensor and the second images thus obtained may show warm objects, in particular persons or animals. The machine learning system would thus be trained to reconstruct heat signatures from visible light images which essentially amounts to detecting living objects if the first image is used as input and the second is used as target. The output of such a function may then be included as additional input to improve the detection of persons and/or animals in further stages of an image processing chain.

According to a second aspect of the invention, a method for training a machine learning system is provided. According to the method, machine learning training data that has been created by the method according to the above description is provided. In particular, the machine learning training data has been obtained automatically, has no distribution shift and has the same perspective for the first and second images of each image pair. With the image pairs of said machine learning training data, the machine learning system is trained. Since the generation of the machine learning training data may be performed automatically, it is easy to generate a large amount of machine learning training data and consequently the machine learning system can be trained well.

According to an embodiment, the machine learning system is a deep neural network. Deep neural networks are particularly well suited for modeling complex non-linear relationships that are typically encountered in image processing or object recognition. Alternatively, the machine learning system is a convolutional neural network, which is particularly well suited for analyzing visual images due to its shift invariance. Alternatively, the machine learning system is based on a Gaussian process, which simplifies the determination of uncertainties.

According to an embodiment, the first image of each image pair is a target image and the second image of each image pair is an input image. This is of particular interest when the second image has been modified compared to the first image by the modification filter, e.g., by a gray filter, a screen with raindrops or a screen with dirt. The machine learning system is then trained to best map the input images to the target images, i.e., to remove the modification from the input images as best as possible. Alternatively, the first image of each image pair is the input image and the second image of each image pair is the target image. This is of particular interest when the second image has been modified by a polarizing filter to remove reflections. Again, the machine learning system is trained to best map the input images to the target images, i.e., to remove reflections off the input images.

According to an embodiment, the second image of each image pair is used to detect image features. This detection of image features may be based on the second image alone or based on the second image in combination with the first image. Using the first images as input and the detected image features as target, the machine learning system is then trained to detect said images features in the first images of each image pair.

According to an embodiment, the second image is an infrared image and the image features are heat signatures of persons and/or animals. A detection of persons and/or animals may be performed on the second image alone. Alternatively, the second image has been modified with a polarizing filter and the image features are reflections off of surfaces. These reflections are revealed through a comparison of the first image with the second image.

According to another aspect of the invention, a device for generating machine learning training data is provided. The device comprises a beam splitter configured to split a common light path into a first light path and a second light path. The device further comprises a first optical arrangement arranged in the first light path and comprising a first image sensor and a second optical arrangement arranged in the second light path and comprising a second image sensor. The first optical arrangement and the second optical arrangement differ in at least one feature. The device further comprises a processing unit configured to associate a first image captured by the first image sensor and a second image captured simultaneously to the first image by the second image sensor and to save the first image and the second image to a non-volatile memory. Hence, the device is configured to generate machine learning training data automatically, wherein the machine learning training data has no distribution shift and has the same perspective for the first and second images of each image pair.

According to an embodiment, a common objective lens is arranged in the common light path. Alternatively or additionally, the first optical arrangement further comprises a first objective lens and the second optical arrangement further comprises a second objective lens.

According to an embodiment, the first image sensor is identical to the second image sensor. Alternatively, the at least one distinguishing feature comprises that the first image sensor is a visible light image sensor and the second image sensor is an infrared image sensor.

According to an embodiment, the at least one distinguishing feature comprises a modification filter in the second optical arrangement, the modification filter being, in particular, a polarizing filter, a gray filter, a screen with raindrops and/or a screen with dirt.

The technical advantages of these embodiments are explained in detail above.

According to an embodiment, the device is configured to perform the method for generating machine learning training data described above.

### BRIEF DESCRIPTION OF THE DRAWINGS

These and other aspects of the invention will be apparent from and elucidated further with reference to the embodiments described by way of examples in the following description and with reference to the accompanying drawings, in which
- Fig. 1: shows a schematic view of an embodiment of a device for generating machine learning training data;
- Fig. 2: shows a schematic view of another embodiment of a device for generating machine learning training data; and
- Fig. 3: shows a schematic view of yet another embodiment of a device for generating machine learning training data.

It should be noted that the figures are purely diagrammatic and not drawn to scale. In the figures, elements which correspond to elements already described may have the same reference numerals. Examples, embodiments or optional features, whether indicated as non-limiting or not, are not to be understood as limiting the invention as claimed.

### DESCRIPTION OF EMBODIMENTS

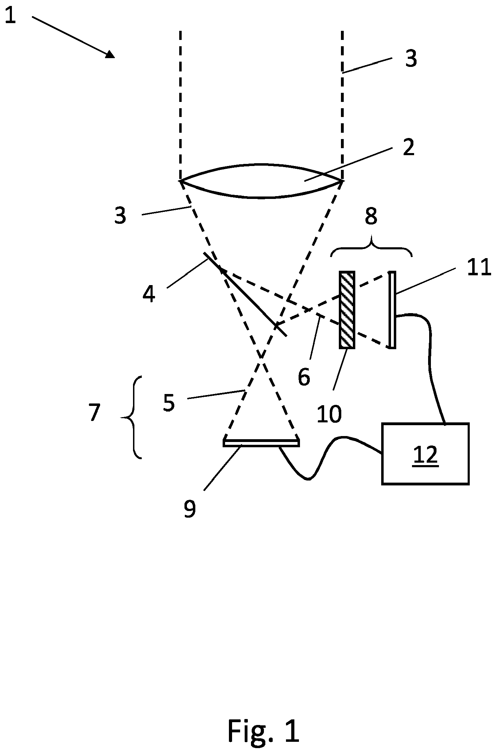

Figure 1 shows a schematic view of an embodiment of a device 1 for generating machine learning training data. Light paths are shown as dashed lines. The device 1 comprises a common objective lens 2 in a common light path 3. A beam splitter 4 is arranged behind the common objective lens 2 and splits the common light path 3 into a first light path 5 and a second light path 6. In this context, "behind" and "in front of" is to be understood with respect to the propagation direction of the light.

The first light path 5 is directed towards a first optical arrangement 7 and the second light path 6 is directed towards a second optical arrangement 8. In this embodiment of the device 1, the first optical arrangement 7 comprises only a first image sensor 9 which is configured to capture a first image. The second optical arrangement 8 comprises a modification filter 10 that introduces a modification of the light in the second light path 6. Such a modification filter 10 can be, for example, a polarizing filter, reducing reflections, or a gray filter, darkening the image. The second optical arrangement 8 further comprises a second image sensor 11 which is configured to capture a second image.

Both the first image sensor 9 and the second image sensor 11 are connected to a processing unit 12. The processing unit 12 is configured to associate a first image captured by the first image sensor 9 to a second image captured simultaneously to the first image by the second image sensor 11. Further, the processing unit 12 is configured to save the first image and the second image to a non-volatile memory. The association of the first image and the second image may be performed in various ways, e.g., based on a time stamp of the time the images were captured, by assigning a similar file name to both image files or by saving both image files in a common directory. The processing unit 12 may even have two parts, one for saving the first images and one for saving the second images, and the association may be performed at a later stage, based on time stamps of the time the images were captured.

Image pairs comprising the first images and the second images are then used as machine learning training data. These image pairs have the technical advantage that they can be obtained without distribution shift and that they share the same perspective.

In the example of a gray filter as modification filter 10, the image pair comprises a correctly exposed first image and an underexposed or overexposed second image. Hence, the machine learning system can be trained to generate a correctly exposed image given an underexposed or overexposed image.

In the example of a polarizing filter as modification filter 10, the image pair comprises a regular first image and a second image that lacks some reflections off of surfaces. In one embodiment, the machine learning system can be trained to remove reflections from images. In another embodiment, the reflections can be detected by analyzing both the first image and the second image, and, e.g., subtracting one image from the other. The reflections are thus revealed and the machine learning system can be trained to recognize reflections on images.

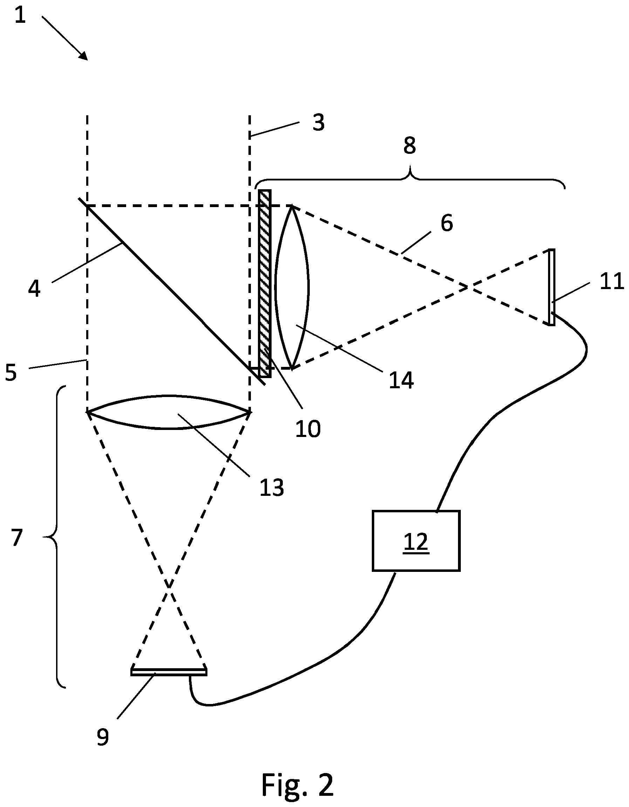

Figure 2 shows a schematic view of another embodiment of a device 1 for generating machine learning training data. In comparison to the embodiment shown in Figure 1, this device has no common objective lens 2 arranged in the common light path 3. Rather, the beam splitter 4 directly splits the incoming light into the first light path 5 and the second light path 6. The first optical arrangement 7 then comprises a first objective lens 13 to form the first image on the first image sensor 9 and the second optical arrangement 8 comprises a second objective lens 14 to form the second image on the second image sensor 11. The modification filter 10 is installed in the second light path 6 between the beam splitter 4 and the second objective lens 14.

The examples of a gray filter as modification filter 10 and a polarizing filter as modification filter 10 have been discussed above.

As yet another example, the modification filter 10 may be a screen with raindrops. Said raindrops may be created by spraying water onto the screen and blowing wind such that the raindrops move and change their shape. Hence, the image pair comprises a clean first image and a second image that has been modified by the raindrops. Hence, the machine learning system can be trained to remove the effect of the raindrops from an image modified by raindrops.

As yet another example, the modification filter 10 may be a screen with dirt. Hence, the image pair comprises a clean first image and a second image that has been modified by the dirt. Hence, the machine learning system can be trained to remove the effect of the dirt from an image modified by dirt.

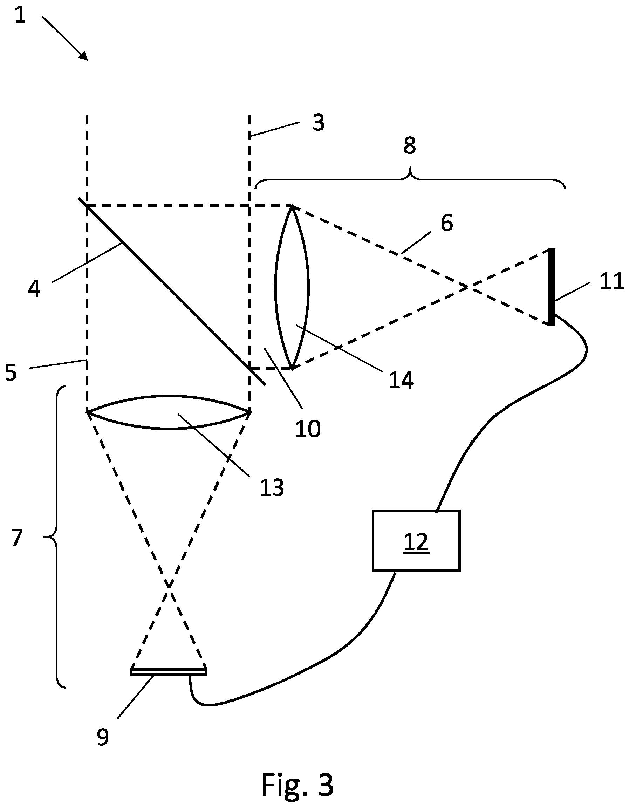

Figure 3 shows a schematic view of yet another embodiment of a device 1 for generating machine learning training data. In this embodiment, no modification filter 10 is used. Rather, while the first image sensor 9 is a visible light sensor, the second image sensor 11 is an infrared sensor, here indicated by the black shading. The second objective lens 14 may have to be adjusted to the transmission and refraction characteristics of infrared light.

In this example, the second image is an infrared image. Said infrared image shows, in particular, persons and animals as warm objects. Hence, the second image may be used to detect persons and animals and said detected persons and animals may be used along with the first image to train the machine learning system to recognize persons and animals.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. Method for generating machine learning training data, the method comprising:
capturing corresponding image pairs, each image pair comprising a first image and a second image, wherein
a common light path (3) is split by a beam splitter (4) into a first light path (5) to a first optical arrangement (7) and a second light path (6) to a second optical arrangement (8), wherein the first optical arrangement (7) and the second optical arrangement (8) differ in at least one distinguishing feature;
the first image is provided by a first image sensor (9) of the first optical arrangement (7);
the second image is provided simultaneously to the first image by a second image sensor (11) of the second optical arrangement (8); and
the first image and the second image are associated with one another; and
saving the first image and the second image of each image pair to a non-volatile memory.

2. Method according to claim 1, wherein a common objective lens (2) is arranged in the common light path (3).

3. Method according to claim 1 or 2, wherein the first optical arrangement (7) further comprises a first objective lens (13) and the second optical arrangement (8) further comprises a second objective lens (14) and, in particular, the first objective lens (13) is identical to the second objective lens (14).

4. Method according to any of claims 1 to 3, wherein the first image sensor (9) is identical to the second image sensor (11).

5. Method according to any of claims 1 to 4, wherein the at least one distinguishing feature comprises a modification filter (10) in the second optical arrangement (8), the modification filter (10) being, in particular, a polarizing filter, a gray filter, a screen with raindrops and/or a screen with dirt.

6. Method according to any of claims 1 to 3 and 5, wherein the at least one distinguishing feature comprises that the first image sensor (9) is a visible light image sensor and the second image sensor (11) is an infrared image sensor.

7. Method for training a machine learning system, the method comprising:
providing machine learning training data that has been created by the method according to any of claims 1 to 6; and
training the machine learning system with the image pairs of the machine learning training data.

8. Method according to claim 7, wherein the machine learning system is one out of a group, the group consisting of a deep neural network, a convolutional neural network and a Gaussian process.

9. Method according to claim 7 or 8, wherein the first image of each image pair is a target image and the second image of each image pair is an input image or the first image of each image pair is the input image and the second image of each image pair is the target image and the machine learning system is trained to best map the input images to the target images.

10. Method according to claim 7 or 8, wherein the second image of each image pair is used to detect image features and the machine learning system is trained to detect said images features in the first images of each image pair.

11. Method according to claim 10, wherein the image features are persons and/or animals or reflections.

12. Device for generating machine learning training data, the device (1) comprising:
a beam splitter (4) configured to split a common light path (3) into a first light path (5) and a second light path (6);
a first optical arrangement (7) arranged in the first light path (5) and comprising a first image sensor (9);
a second optical arrangement (8) arranged in the second light path (6) and comprising a second image sensor (11), wherein the first optical arrangement (7) and the second optical arrangement (8) differ in at least one feature; and
a processing unit (12) configured to associate a first image captured by the first image sensor (9) and a second image captured simultaneously to the first image by the second image sensor (11) and to save the first image and the second image to a non-volatile memory.

13. Device according to claim 12, wherein a common objective lens (2) is arranged in the common light path (3) and/or the first optical arrangement (7) further comprises a first objective lens (13) and the second optical arrangement (8) further comprises a second objective lens (14).

14. Device according to claim 12 or 13, wherein the first image sensor (9) is identical to the second image sensor (11) or the at least one distinguishing feature comprises that the first image sensor (9) is a visible light image sensor and the second image sensor (11) is an infrared image sensor.

15. Device according to any of claims 12 to 14, wherein the at least one distinguishing feature comprises a modification filter (10) in the second optical arrangement (8), the modification filter (10) being, in particular, a polarizing filter, a gray filter, a screen with raindrops and/or a screen with dirt.
